# EUROPEAN PATENT APPLICATION

(11) **EP 0 952 306 A1**
(43) Date of publication of application: **27.10.1999**
(21) Application number: 98303147.7
(22) Date of filing: 23.04.1998
(51) Int. Cl.: E21B 43/10, E21B 29/10, F16L 11/12, F16L 55/165, F16L 9/12

(54) **Foldable tube**

(71) Applicant: SHELL INTERNATIONALE RESEARCH MAATSCHAPPIJ B.V., 2596 HR Den Haag (NL)
(72) Inventor: Lohbeck, Wilhelmus Christianus Maria, 2288 GD Rijswijk (NL)

(57) **Abstract**

A foldable tube comprises a wall in which at least three elongate relatively flexible areas are present, which areas form plastic hinges which define a wall segment that can be folded inwardly to bring the tube into a contracted shape.

## Description

### Background of the Invention

The invention relates to a foldable tube and to a method for placing such a tube in a tubular cavity.

It is known to fold flexible hoses into a flattened shape in order to facilitate easy storage, for example by reeling the flattened hose around a small diameter reeling drum.

It is also known to insert well tubulars in a contracted position into a wellbore and to expand the tubular downhole at the location where the tubular is to be used. Soviet patent specification SU-633825 discloses the use of an initially corrugated tube which is expanded downhole into a tubular shape. International patent application, publication No. WO 97/06345 discloses the use of a flexible well tubular which is folded into a kidney shape during its descent through the wellbore and which is inflated downhole to bring the tubular into a cylindrical shape, whereafter the tubular is polymerised to provide a well casing. This known tubular has an Y-shape and serves to provide a seal at the junction between a main well and a branch well. Disadvantages of these known expandable corrugated and flexible foldable tubes are that they need to be relatively thin to allow an easy expansion within a borehole or other cavity and that the shape of the unfolded tube is not well defined.

It is an object of the present invention to alleviate the disadvantages of the known foldable tubes and to provide a foldable tube which can be folded and unfolded relatively easily but which generates an expanded tube which is robust and which has a well defined tubular shape.

### Summary of the Invention

The foldable tube according to the invention comprises a tubular wall having at least three elongate relatively flexible areas where the wall is more flexible than other areas of the wall, which areas are oriented in a substantially parallel direction relative to each other along at least a substantial part of the length of the tube so that in use said areas form plastic hinges which define a wall segment that is inwardly foldable to bring the tube into a contracted shape.

An advantage of the use of plastic hinges in accordance with the present invention is that they lock the unfolded tube in its tubular shape and that the tube can be made cheaply by creating the plastic hinges in the wall of a tube which has, apart from the plastic hinges, a similar wall strength and thickness as a conventional tube that would normally be used in the same situation.

It is preferred that said relatively flexible areas are formed by trough-shaped grooves in the wall of the tube, which grooves are oriented in a parallel or helical direction relative to a longitudinal axis of the tube.

Alternatively the relatively weak areas are formed by mutually parallel axial or helical rows of holes. These holes may pass through the wall of the tube or extend only partially into the outer or inner surface of the wall of the tube.

It is also preferred that at least one set of four grooves is arranged in the wall of the tube such that each set of four grooves defines a tube segment that can be folded as a U-shaped recess inwardly into the tube. The sides of said U-shaped recess may even be folded towards each other in a delta-shape and the tips of the recess may be brazed together to fix the tube in its folded shape until a relatively low tension force is exerted to the brazed joint.

The tube can be folded to a high degree of contraction if two sets of four grooves are arranged symmetrically at opposite sides of the tube such that upon folding of the tube two delta- or U-shaped recesses are formed at opposite sides of the tube.

If the tube needs to be foldable to a less high degree of contraction then a single groove or a plastic hinge formed by a tubule may be arranged at one side and a set of four grooves at an opposite side of the inner wall of the tube.

The latter embodiment of the tube according to the invention can be used as a well liner at the junction between a main well and a branch well if a branch tube is secured around a window in the wall of the tube between said single groove and an adjacent groove of said set of four grooves at said opposite side of the tube.

In that case the tube is lowered through the main well towards the junction after folding the tube into its contracted shape. At the junction the tube is then expanded such that the branch tube is pushed into the entrance of the branch well.

The tube according to the present invention can be made of any material which is plastically deformable such that the tube does not break as a result of the folding and unfolding operations.

Suitable materials are steel, in particular formable steel grades such as high strength low alloy steels and dual phase steels, and plastic materials such as polypropylene and polyvinylchloride.

### Brief description of the drawings

The invention will be described in more detail and by way of example with reference to the accompanying drawings, in which
Fig. 1 is a cross-axial sectional view of a foldable tube according to the invention which comprises two sets of four grooves in the inner wall of the tube;
Fig. 2 shows the tube of Fig. 1 at a somewhat reduced scale wherein the tube is folded into its contracted shape such that two U-shaped recesses are formed at opposite sides of the tube;
Fig. 3 is a cross-axial sectional view of an alternative embodiment of the foldable tube according to the present invention wherein a single groove is present at one side and a set of four grooves is present at an opposite side of the tube;
Fig. 4 shows the tube of Fig. 3 at a somewhat reduced scale wherein the tube is folded into its contracted shape such that a U-shaped recess is formed at the upper side of the tube;
Fig. 5 is a cross-axial sectional view of a foldable tube according to the invention inside a well wherein the tube is provided with a branch tube which is inserted into the entrance of a branch well upon downhole expansion of the foldable tube;
Fig. 6 is a cross-axial sectional view of a foldable tube according to the present invention with a U-shaped recess at one side and a hinge provided by a tubule at the other side;
Fig. 7 is a cross-axial sectional view of a foldable tube according to the invention which comprises three axial grooves at one side of the tube;
Fig. 8 is a cross-axial sectional view of a foldable tube according to the present invention where the folded tube and the U-shaped recesses have a delta-shape; and
Fig. 9 is a cross-axial sectional view of a foldable tube according to the present invention where delta-shaped recesses are present at both sides of the tube.

### Detailed description of the invention

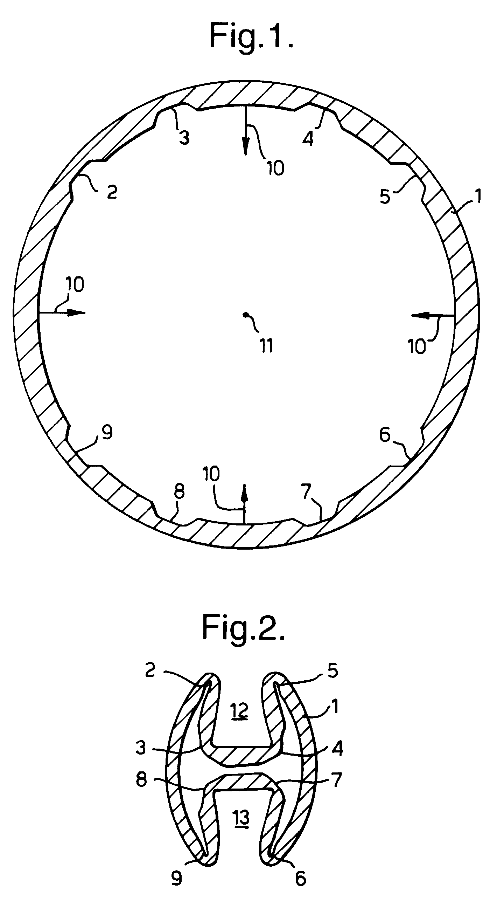

Referring to Fig. 1 there is shown a foldable tube 1 which comprises two sets of axial trough-shaped grooves 2-9 in the inner wall of the tube 1.

Fig. 1 shows the tube 1 in its unfolded cylindrical shape and the grooves 2-9 each have a similar depth and width. One set of four grooves 2-5 has been machined into the inner wall at the upper side of the tube 1 and the other set of four grooves 6-9 has been machined into the inner wall at the lower side of the tube 1, such that the two sets of grooves 2-5 and 6-9 are symmetrical relative to each other. The distances between the grooves 2 and 3, the grooves 4 and 5, the grooves 6 and 7 and the grooves 8 and 9 are equal to each other.

Furthermore the distance between the grooves 3 and 4 is equal to the distance between the grooves 7 and 8 and the distance between the grooves 2 and 9 is equal to the distance between the grooves 5 and 6.

The symmetrical arrangement of two sets of four grooves 2-5 and 6-9 enables the tube 1 to be folded such that the wall segments between the grooves 3 and 4, 7 and 8, 5 and 6 and 2 and 9 are moved inwardly towards the centre 11 of the tube 1 as illustrated by arrows 10 and the tube 1 obtains its contracted shape as is shown in Fig. 2.

Fig. 2 shows how the relatively thin parts of the tube 1 adjacent to the grooves 2-9, where the wall thickness is smaller than the wall thickness of other parts of the tube 1, act as plastic hinges during the folding procedure.

As a result of the hinging action the grooves 3, 4 and 7 and 8 open up whereas the grooves 2, 5, 6 and 9 are largely closed so that a first U-shaped recess 12 is formed at the upper side of the tube 1 and a second U-shaped recess 13 is formed at the lower side of the tube 1. The folded tube 1 shown in Fig. 1 has the shape of a rivet which has a significantly smaller outer width than the inner width of the unfolded tube shown in Fig. 1. Therefore the folded tube can be moved easily through the bore of a conduit or underground well, even through narrow passages formed by valves and sharp curvatures.

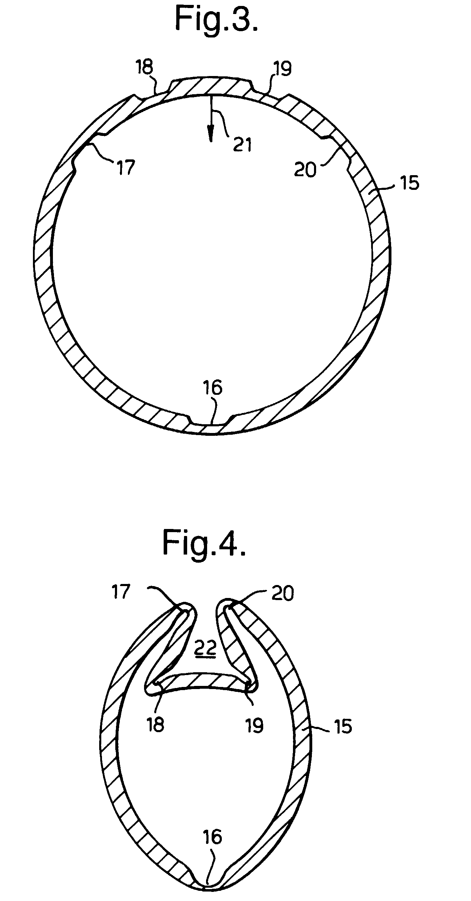

Fig. 3 shows an alternative embodiment of the foldable tube according to the invention in which the tube 15 comprises a single axial groove 16 at the lower side of the tube 15 and a set of four axial grooves 17, 18, 19 and 20 at the upper side of the tube 15.

The grooves 16 and 17 and 20 have been machined in the inner wall of the tube 15 and the grooves 18 and 19 have been machined in the outer wall of the tube 15.

The relatively thin wall parts of the tube 15 adjacent to the grooves 16-20 form wall areas which are more flexible than other parts of the tube 15. The groove pattern shown in Fig. 3 allows the wall segment between the grooves 17 and 20 to be folded inwardly in the direction of arrow 21 such that the tube 15 obtains the folded shape shown in Fig. 4.

Fig. 4 shows that on folding of the tube 15 a U-shaped recess 22 is formed by the wall-segment of the tube 15 between the set of four grooves 17-20 at the upper side of the tube 15. The two relatively big wall segments of the tube 15 between the groove 16 at the lower side and the two outer grooves 17 and 20 at the upper side of the tube 15 thereby pivot towards each other about the plastic hinge formed the at the bottom of the tube 15 near the groove 16.

The tube 15 shown in Fig. 4 can be unfolded by moving an expansion mandrel in axial direction through the tube 15 and/or by inflating the tube 15.

The unfolded tube 15 then obtains its cylindrical shape as is shown in Fig. 3 and the configuration of parallel grooves 16-20 will than lock the tube 15 since the wall segments between the grooves 16-20 form arches which will be subject to hoop stress if the hydraulic pressure outside the tube 15 is higher than the hydraulic pressure inside the tube 15.

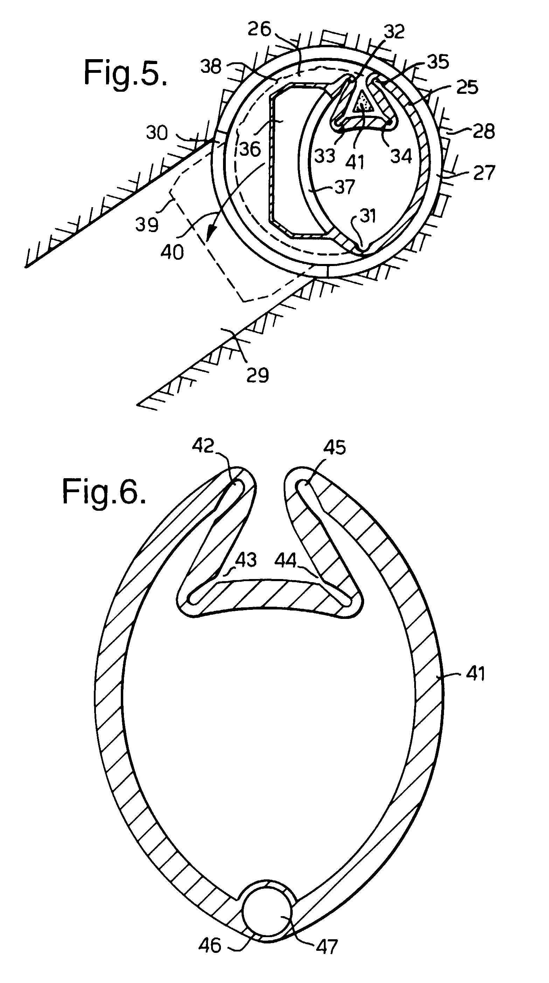

Fig. 5 shows a foldable tube 25 which is similar to the foldable tube 15 shown in Figs. 3 and 4 inside a main well 26 in which a well casing 27 has been cemented in place.

The main well 26 passes through an underground formation 28 and a branch well 29 has been drilled through a window 30 in the well casing 27 laterally away from the main well 26 into the formation 28.

The tube 25 is made of steel and comprises a single groove 31 at its lower side and a set of four grooves 32-35 at its upper side. A branch tubing section 36 has been welded to the wall segment of the tube 15 between the grooves 31 and 32 around a window 37 that has been machined in the wall of the tube 25.

The tube 25 has been moved in its folded contracted position through the main well 26 until the branch tubing section 36 is located adjacent to the entrance of the branch well 29.

Then the tube 25 is expanded by an expansion mandrel into its cylindrical shape, which is illustrated by broken lines 38 such that the branch tubing section 36 is pushed through the window 30 in the well casing 27 into the branch well 29 as illustrated by broken lines 39 and the arrow 40.

An elongate breakable container 41 containing a sealing agent is arranged within the delta-shaped recess formed between the set of four grooves 32-35 at the upper side of the tube 25 which container is squeezed between the inner wall of the well casing 27 and the outer wall of the tube 25 if the tube is unfolded to its cylindrical shape 38. The sealing agent is thereby squeezed into the annular space surrounding the unfolded tube 25 and the branch tubing segment 39 and provides on curing an adequate seal which also fixes the unfolded tube 25 and branch tubing section 36 inside the main and the branch wells 26 and 29.

Fig. 6 shows a folded tube 41 which has a set of four grooves 42, 43, 44 and 45 at its upper side and a single tubular hinge 46 at its lower side.

The tubular hinge 46 provides an area where the wall of the tube is more flexible than the other parts of the tube 41, apart from the areas of the tube 41 adjacent to the grooves 43-45.

The tubular hinge 46 provides moreover an area where the wall of the tube can be deformed in circumferential direction during the unfolding procedure.

After completion of the unfolding procedure the interior 47 of the tubular hinge 46 can be filled with a filling agent which provides support and fixes the tubular hinge 46 in its expanded position. The interior 47 of the tubular hinge 46 may also contain electric or hydraulic conduits for transmission of electric and/or hydraulic power and/or signals along the length of the tube 41.

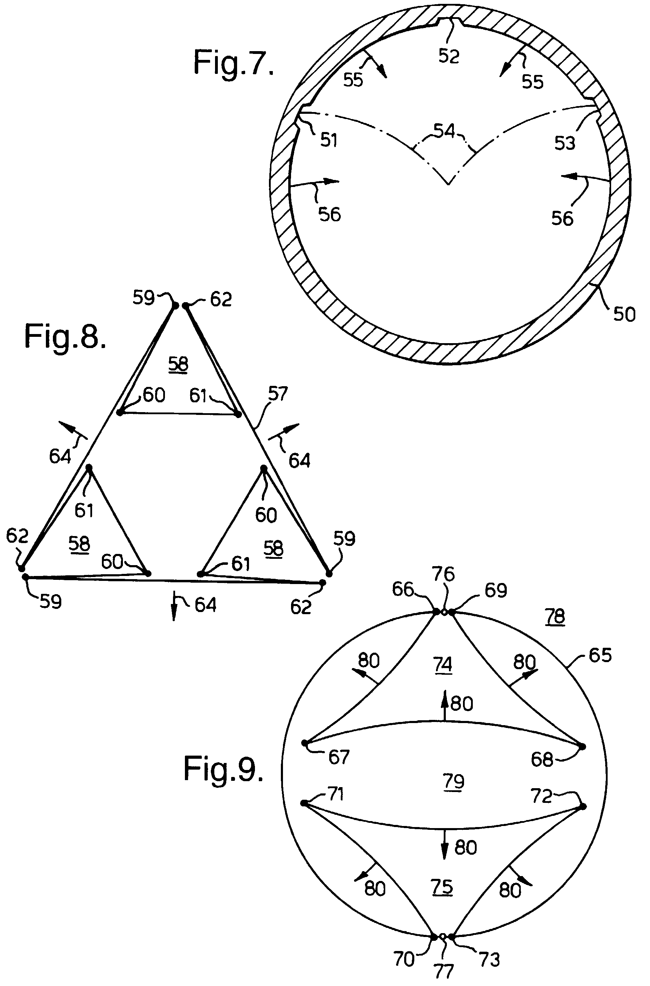

Fig. 7 shows an embodiment of the foldable tube according to the invention where the tube 50 comprises at its upper side three mutually parallel axial or helical grooves 51, 52 and 53 which define three plastic hinges that allow the upper side of the tube 50 to be folded inwardly as illustrated by phantom lines 54 and arrows 55.

After the upper side of the tube 50 has been folded inwardly the outer width of the lower side of the tube 50 can be reduced as illustrated by arrows 56 by pulling a circumferential or helical wire (not shown) around the thus folded tube 50.

The tube 50 is then unfolded by increasing the hydraulic pressure in the interior of the tube 50 which breaks the wire and induces the tube 50 to unfold into its cylindrical shape shown in Fig. 7.

Fig. 8 shows an embodiment of the foldable tube according to the invention where the folded tube 57 has a delta-shape and comprises at each corner a delta-shaped recess 58.

Each delta-shaped recess 58 is formed by bending the tips of the legs of a U-shaped recess towards each other and each recess is defined by a set of four plastic hinges 59, 60, 61 and 62 where the wall of the tube 57 is more flexible than at other parts of the tube 57.

The tube 57 is unfolded by increasing the hydraulic pressure in the interior 63 of the tube 57 which causes the tube 57 to expand in the direction of the arrows 64 so that the recesses 58 are removed. By further increasing the hydraulic pressure in the interior 63 of the tube 57, the tube 57 is brought into a cylindrical shape (not shown).

Fig. 9 shows a tube according to the invention where the tube 65 comprises a set of four axial plastically deformable hinges 66, 67, 68 and 69 at its upper side and also a set of four axial plastically deformable hinges 70, 71, 72 and 73 at its lower side.

Each set of four hinges 66-69 and 70-73 defines a delta-shaped recess 74 and 75, respectively.

The two hinges 66 and 69 at the top of the folded tube 65 and also the two hinges 70 and 73 at the bottom of the tube 65 have been brazed together. The thus formed brazed joints 76 and 77 created a seal between the interior of the delta-shaped recesses 74 and the exterior 78 of the tube 65.

The tube 65 is suitable to be used in its illustrated folded shape as a drill pipe where drilling mud is pumped through the interior 79 of the tube 65 and through the delta-shaped recesses 74 and 75 to a drill bit (not shown).

After a borehole section has been drilled a casing is then created by inflating the tube 65 using a high pressure fluid or expansion mandrel (not shown) so that the brazed joints 76 and 77 break open and the tube 65 unfolds into its cylindrical shape as illustrated by arrows 80. The drill bit is then pulled to surface on a wireline or coiled tubing passing through the interior 79 of the expanded tube 65.

The tube 65 and also the tube configurations illustrated in the other drawings can be spooled around a reeling drum in their folded shape and reeled from the drum into an underground borehole to provide a lining of the borehole wall or inside a corroded or damaged well tubular.

The walls of the tube according to the invention may comprise sieve openings of a predetermined size so that the tube provides a well screen which is lowered into the borehole in its folded shaped and then unfolded downhole by moving an expansion mandrel through the tube or by inflating a balloon in the interior of the tube. The unfolding procedure does not vary the sieve opening size so that unfolded tube provides a sandscreen with a well defined sieve opening size.

## Claims

1. A foldable tube comprising a tubular wall having at least three elongate relatively flexible areas where the wall is more flexible than other areas of the wall, which areas are oriented in a substantially parallel direction relative to each other along at least a substantial part of the length of the tube so that in use said areas from plastic hinges which define a wall segment that is inwardly foldable to bring the tube into a contracted shape.

2. The foldable tube of claim 1 wherein said relatively flexible areas are formed by through-shaped grooves in the wall of the tube, which grooves are oriented in a parallel or helical direction relative to a longitudinal axis of the tube.

3. The foldable tube of claim 3 wherein at least one set of four grooves is arranged in the wall of the tube such that each set of four grooves defines a tube segment that can be folded as a delta- or U-shaped recess inwardly into the tube.

4. The foldable tube of claim 3 wherein two sets of four grooves are arranged symmetrically at opposite sides of the tube such that if the tube is folded into a contracted shape two delta- or U-shaped recesses are formed at opposite sides of the tube.

5. The foldable tube of claim 3 wherein a single groove is arranged in the inner wall at one side of the tube and a set of four grooves is arranged at an opposite side of the inner wall of the tube.

6. The foldable tube of claim 5 wherein a branch tube is secured around a window in the wall of the tube which window is located between said single groove in said one half of the tube and an adjacent groove of said set of four grooves at said opposite side of the tube.

7. The foldable tube of any preceding claim wherein the foldable tube is a well tubular which is insertable in a contracted shape into the well and expandable downhole into a substantially cylindrical shape.

8. The foldable tube of claim 6 wherein the tube is a well casing at a branchpoint in an underground well and the branch tube forms part of a well casing or liner in a well branch, and the tube is insertable in a contracted shape into the well and expandable downhole into a substantially cylindrical shape such that the branch tube is positioned at the entrance of the branch well near the branchpoint.

9. The foldable tube of claim 1 wherein the tube is made of steel.

10. The foldable tube of claim 1 wherein the tube is made of a plastic material.

11. A method of placing a foldable tube according to claim 1 in a tubular cavity, the method comprising inserting the tube folded in its contracted shape into the cavity, unfolding the tube into its substantially cylindrical shape at a selected location within the cavity and securing the tube within the cavity.

12. The method of claim 11 wherein the tube comprises at least one set of four grooves according to claim 3 which grooves define a delta- or U-shaped recess when the tube is inserted into the cavity and a tubular container containing a sealing agent is arranged within said recess when the tube is inserted into the cavity, which container is squeezed and breaks open as a result of the unfolding of the tube within the cavity and sealing agent is released into the annular space between the unfolded tube and the wall of the cavity, which sealing agent is then allowed to create an annular seal between the unfolded tube and the cavity wall.

13. The method of claim 11 wherein the tube is unfolded by inserting a sealing plug at one end of the tube and pumping a high pressure fluid into the other end of the tube.
